# EUROPEAN PATENT APPLICATION

(11) **EP 2 428 183 A1**
(43) Veröffentlichungstag der Anmeldung: **14.03.2012**
(21) Anmeldenummer: 10772317.3
(22) Anmeldetag: 26.04.2010
(51) Int. Cl.: A61C 17/16, A61C 17/34

(54) **MECHANISCHE ZAHNBÜRSTE UND ANTRIEBSMECHANISMUS DAFÜR (VERSCHIEDENE AUSFÜHRUNGEN)**

(30) Priorität: 04.05.2009 RU 2009117006
(71) Anmelder: Limited Liability Company "Nauka, Technika, Medicina", Tomsk 634028 (RU)
(72) Erfinder: KHUDOLEY, Vladimir Nikolaevich, Tomskaya obl., 634510 (RU)
(74) Vertreter: Jeck, Anton
(86) Internationale Anmeldenummer: PCT/RU2010/000198
(87) Internationale Veröffentlichungsnummer: WO 2010/128894

(57) **Zusammenfassung**

Die Erfindung betrifft eine mechanische Zahnbürste, die einen entlang der Längsachse liegenden Griff mit einem Motor, einen Hals und einen Kopf aufweist, in dem ein Antriebsmechanismus angeordnet ist, wobei der Kopf die Form eines auf einer Seite geöffneten Schutzschilds aufweist, in dem ein Borstenhalter eingebaut ist, wobei der Borstenhalter mit der Möglichkeit einer Winkelbewegung in entgegen gesetzten Richtungen um die Längsachse herum ausgebildet ist und wobei der Borstenhalter entlang der Längsachse der Zahnbürste angeordnet ist. Damit eine Abdichtung des Zahnbürstenantriebs gewährleistet, das Reaktionsmoment behoben und die Sicherheit der Bürstenanwendung gesteigert ist, sieht die Erfindung vor, dass der Borstenhalter mit einer geraden Anzahl von einzelnen Borstenringen mit einer radialen Borstenstellung ausgebildet ist und dass die Borstenringe entlang der Längsachse der Zahnbürste mit ihren Stirnseiten zueinander und mit dem Schutzschild mit Hilfe von Dichtungen so gekoppelt sind, dass sie ein Druckgehäuse für den Antriebsmechanismus bilden.

## Beschreibung

Die Erfindung betrifft eine mechanische Zahnbürste nach dem Oberbegriff des Anspruchs 1 und einen Antriebsmechanismus für die Zahnbürste.

Die Erfindung gehört zu dem Gebiet der medizinischen Technik, zu den Mitteln für die Mundhöhlenpflege, und zwar zu den mechanischen Zahnbürsten mit einer Batteriespeisung.

Die Vorteile der Zahnreinigung bei Benutzung von mechanischen Zahnbürsten sind bekannt. Die mechanischen (auch elektrischen) Zahnbürsten enthalten meistens einen Griff, in dem ein Motor eingebaut ist, einen Hals und einen Kopf, in den bewegliche Borstenhalter eingebaut sind. Diese Elemente liegen in Bürstenlängsachse nacheinander sowie auch mit dem Mechanismus, der die Borstenhalter in Bewegung versetzt.

Mechanische Zahnbürsten mit Borstenhaltern, die sich entlang der Bürstenlängsachse erstrecken (US 4163300), haben eine einfachere Konstruktion. Der Kopf einer solchen Zahnbürste stellt einen auf einer Seite geöffneten Schutzschild dar, in den die beweglichen Borstenhalter eingebaut sind. Er stellt eine Drehwelle mit über die ganze Welle entlang fixierten, radial gestreckten Borsten oder Borstenbündeln dar, die eine Flaschenbürste bilden. Die Drehwelle ist direkt mit der Motorwelle gekoppelt. Der Hauptnachteil dieses Kopfs besteht darin, dass bei der Drehung der Borstenhalter auf dem Griff ein reaktives Drehmoment entsteht. Das Drehmoment ist zu kompensieren, um den Griff in den Fingern festhalten zu können. Das macht die Anwendung der Zahnbürste sehr unbequem.

Dieser Nachteil ist bei Bürstenköpfen (US 5864911) behoben, bei denen im Schutzschild zwei parallele Halter-Bürsten eingebaut sind, die sich in entgegen gesetzte Richtungen drehen. Die Halterwellen sind mit einem Motor mit Hilfe von Biegewellen durch ein Räderwerk gekoppelt. Die Zahnbürste ist für eine gleichzeitige Zahnreinigung von beiden Seiten bestimmt. Dafür sind die Bürsten in einigem Abstand zueinander eingebaut, wobei eine Änderungsmöglichkeit dieses Abstands durch flexible Halter gegeben ist. Der Nachteil der Zahnbürste besteht darin, dass man mit ihr den einzeln stehenden Zahn effektiver reinigen kann. Bei einer Kiefergebissreinigung wird der Kontakt zwischen der Borstenoberfläche und den Zahnoberflächen abgebrochen, besonders auf den Kieferabschnitten, die bogenförmig sind.

Bekannt ist auch eine mechanisierte Zahnbürste mit Haltern, die sich entlang der Bürstenlängsachse drehen und die für die Zahnreinigung von einer Seite bestimmt ist (EP 0488971). Die Borstenhalter stellen auch zwei parallele Wellen mit radialer Borstenstellung dar. Die Halter sind in einem Abstand zueinander eingebaut, der ein wenig die Borstenlänge übersteigt, so dass die Borsten der Halter einander überdecken. Die Halter drehen sich in entgegen gesetzten Richtungen über ein paar von Zahnrädern, die mit dem Motor im Griff eingebaut sind. Das Problem der Antriebsabdichtung ist bei solchen Zahnbürsten schon gelöst, sie wird durch eine Abdichtung der Drehwellen gewährleistet.

Der Hauptnachteil dieser Zahnbürste, wie von allen analogen Zahnbürsten mit einem Borstenhalter in der Form einer Flaschenbürste, ist der Stangenhalter der Zahnbürste. Diese Zahnbürste hat direkt an der Stange eine sehr hohe Borstendichte, um eine ausreichende Dichte an den Borstenenden zu garantieren. Die Speisereste und die Verschmutzungen werden durch die Borsten ergriffen und durch Zentripedalkräfte zwischen den Borsten im Bereich der erhöhten Borstendichte versteckt. Es ist sehr kompliziert, so eine Zahnbürste durchzuspülen. Wegen der überschneidenden Borsten wird sie schnell für die Anwendung unbrauchbar. Wegen dieses großen Nachteils sind diese Zahnbürsten nicht geeignet und verwendbar.

Bekannt ist eine Zahnbürste ohne mechanischen Antrieb, in der die Längsverschiebung der Zahnbürste von Hand in eine drehende Bewegung der Borstenhalter umgewandelt wird (RU 2240714). Die Zahnbürste hat eine Vielzahl von drehbaren Borstenhaltern, die mechanisch mit einem Handgriff für die Bewegung gekoppelt sind. Jeder Halter stellt ein Rad mit radial auskragenden Borsten dar. Die Räder sind mit den Achsen drehbar eingebaut. Die Achsen der Räder liegen auf einer Fläche, die zur Fläche der Berührung mit den Zähnen parallel und abgewinkelt zu der Bürstenlängsachse liegt. Dieser Winkel liegt innerhalb der Grenzen von 15-75 Grad. Bei einer solchen geneigten Achsanordnung der Räder in Bezug auf die Bürstenbewegung führt die Reibung der Borsten an den Zähnen zur Räderdrehung und zur üblichen reinigenden Wirkung von einer Seite zu der anderen Seite, die einen Sekundäreffekt der Zahnreinigung von oben nach unten bildet. Diese Zahnbürste gehört zu den Handbürsten und hat keinen Antriebsmechanismus für den Borstenhalter. In diesem Zusammenhang ist auch die Notwendigkeit einer Abdichtung hinfällig.

Bekannt sind mechanische Zahnbürsten mit Schwingungs- und Drehungsbewegungen der Borstenhalter verschiedener Form um eine Achse, die zur Fläche der reinigenden Bürstenoberfläche senkrecht steht (z. B.: RU 2270638, WO 2004/080330, WO 2004093718 u. a.).

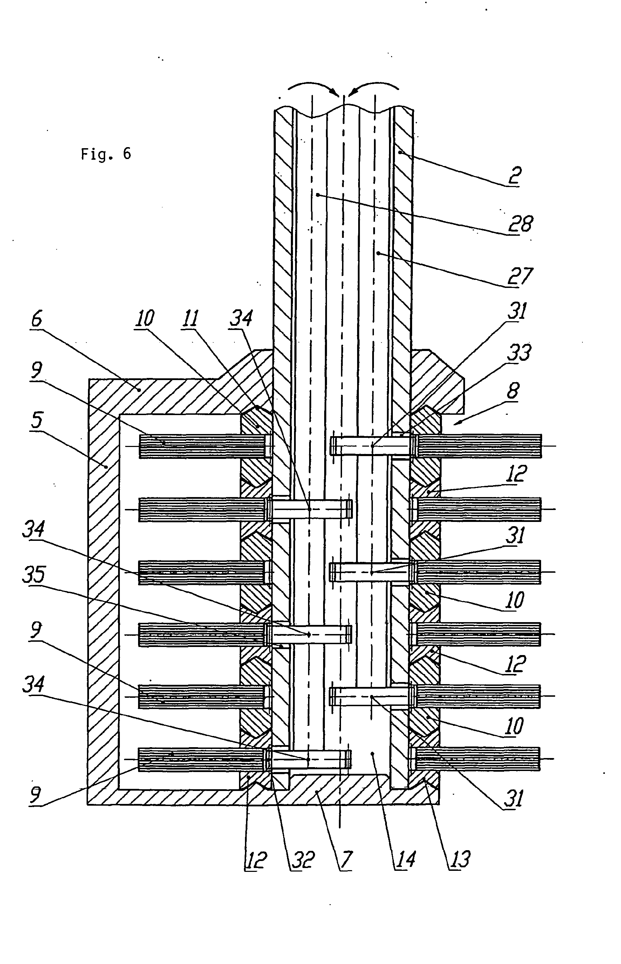

Bekannt sind auch Zahnbürsten mit hin- und hergehender Bewegung der Halter entlang deren Längsachse (WO 03/103531). Für eine Effizienzsteigerung der Reinigung sind mehrere Halter benutzt, die in Gegenphase schwingen (s. Fig. 6B im Patent RU 2318471). Gleichartige Zahnbürsten haben keine hohe Effizienz der Zahnreinigung, die durch eine Querbewegung der Borsten zu den Zähnen bedingt ist.

Es ist bekannt, dass das beste Ergebnis bei der Zahnreinigung mit Hilfe einer Borstenbewegung nach oben und nach unten erreicht wird. Dies hilft bei der Entfernung der Speisereste, die sich in den Spalten zwischen den Nachbarzähnen befinden. Deshalb ist eine mechanische Bewegung bei den elektrischen Zahnbürsten das Objekt der modernen Erfindungs- und Designeraktivität.

Im Laufe der letzten Jahre erschien auf dem Markt eine Vielzahl von verschiedenen Typen mechanischer Zahnbürsten mit einer komplizierten Bewegung der Borstenhalter auf verschiedenen Flächen (US 5070567, RU 2300344 u. a.). Dabei wird eine effizientere Zahnreinigung mit Hilfe von komplizierten, teuren und unwirksamen Antriebsmechanismen erreicht.

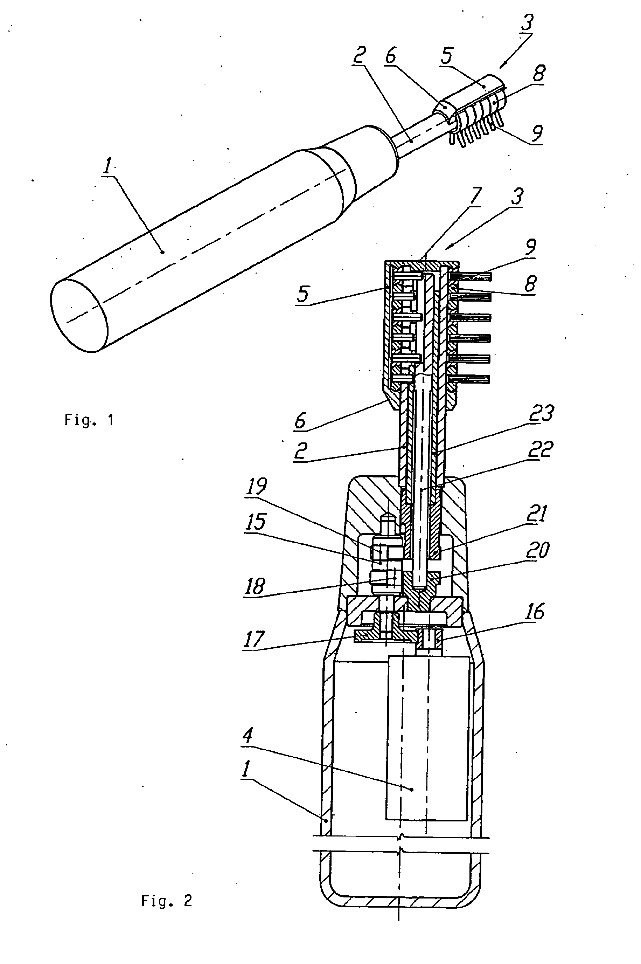

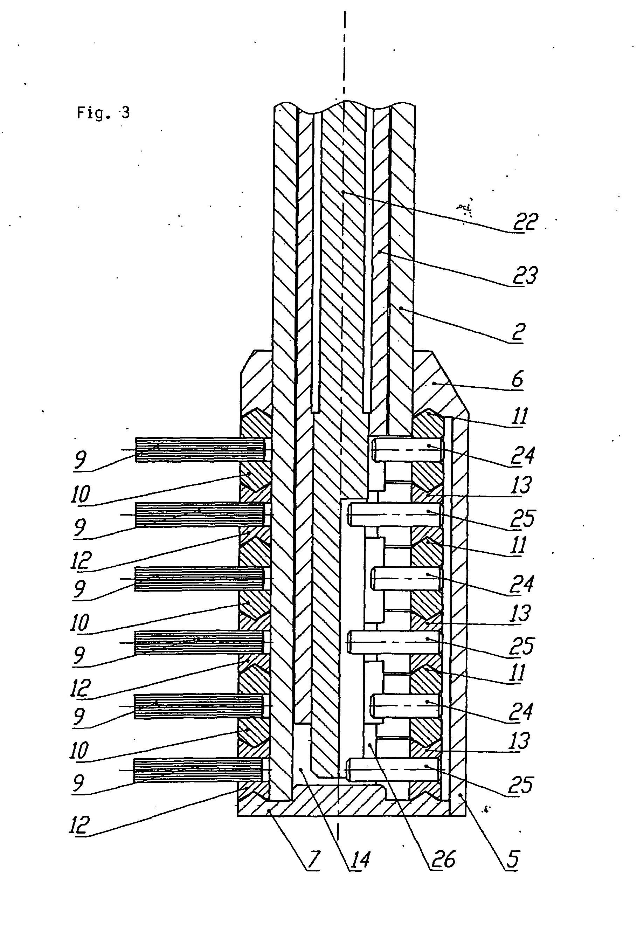

Es sind auch mechanische Zahnbürsten bekannt, deren Borstenbewegung ihre Bewegung von Hand bei der Bewegung der Zahnbürste nach oben und nach unten begrenzt (RU 2314775, Fig. 2 und 3). Hier sind drei Borstenhalter in Form von Klötzen ausgeführt, die nach außen aus einem an einer Seite geöffneten Bürstenkopfgehäuse herauskragen. Das Gehäuse funktioniert als Schutzschild. Die Halter haben eine Möglichkeit, Winkelschwingungsbewegungen um die Achse auszuführen, die im Kopfgehäuse parallel zur Bürstenlängsachse fixiert ist. Die Nachbarhalter bewegen sich dabei in Gegenrichtungen. Die angegebene Zahnbürste ist als Prototyp gewählt.

Der Antriebmechanismus der Zahnbürste stellt einen Linienantrieb dar, der im Gebiet eines Kopfs einen kurvengesteuerten gebogenen Durchschnitt hat, mit dem die Nocken im unteren Teil des Borstenhalters ineinander greifen. In einer anderen Variante ist die Antriebswelle im Bürstenkopfbereich gebogen und bildet einen Nockenbereich. Das untere Ende jedes Halters ist mit dem Durchschnitt ausgeführt, der mit diesem gebogenen Nockenbereich der Antriebswelle ineinander greift. Bei solchen Zahnbürsten ist das Problem der Abdichtung des Antriebs gegen Wasser und Zahnpasta nicht gelöst, die beim Eindringen ins Innere des Bürstenkopfs zum Bruch führen kann. Der bei der Zahnbürste angewandte direkte Antrieb hat nicht die höhere Härte und beschränkt die übertragbare Leistung, die für eine effiziente Zahnreinigung notwendig ist. Außerdem beschränkt der Antriebsmechanismus den Drehwinkel der Halter auf eine Bewegung, die nicht ausreichend für eine effiziente Zahnreinigung ist. Die auskragenden Teile der Klötze der Borstenhalter, die sich zueinander entgegen bewegen, beschwören eine Gefahr des Festklemmens von Weichteilen der Mundhöhle herauf. Das Vorhandensein von drei Haltern, die sich in entgegen gesetzten Richtungen bewegen, garantiert keinen Ausgleich des Reaktionsmoments. Das Drehmoment geht auf die Finger des Benutzers über.

So bleibt die Entwicklungsaufgabe einer mechanisierten Zahnbürste, die gute Parameter aller Gebrauchswerteigenschaften hat, einschließlich der Einfachheit und eines nicht hohen Wertes, wie früher aktuell.

Es ist Aufgabe der Erfindung, die Abdichtung des Zahnbürstenantriebs zu gewährleisten, das Reaktionsmoment zu beheben und eine Sicherheitssteigerung der Bürstenanwendung zu errreichen.

Die gestellte Aufgabe wird durch die Merkmale des Anspruchs 1 gelöst.

Um das angegebene technische Ergebnis zu erreichen, weist die mechanisierte Zahnbürste, wie der Prototyp, einen entlang der Achse liegenden Handgriff mit einem Motor, einem Hals und einem Kopf auf, wobei in den Griff ein Antriebsmechanismus eingebaut ist. Der Kopf ist in Form eines auf einer Seite geöffneten Schutzschilds ausgebildet, in dem bewegliche Borstenhalter eingebaut sind. Die Borstenhalter sind mit einer Winkelbewegungsmöglichkeit in entgegen gesetzte Richtungen um die Bürstenlängsachse herum ausgebildet. Im Vergleich zum Prototyp sind die Borstenhalter, deren Anzahl geradzahlig ist, in Form einzelner Ringe mit radialer Borstenstellung ausgebildet. Die Ringe liegen entlang einer Achse und sind mit ihren Stirnseiten miteinander und mit den Stirnseiten eines Schutzschilds mit Hilfe von Bewegungsdichtungen so zusammengefügt, dass sie ein Druckgehäuse für einen Antriebsmechanismus der Borstenhalter bilden.

Eine solche mechanisierte Zahnbürste kann in zwei Varianten gebaut werden: mit einer aussetzenden Winkelbewegung der Borstenhalter, die eine Schwingungsbewegung ist; und mit einer fortlaufenden Winkelbewegung der Borstenhalter, die eine Drehbewegung ist. Im ersten Fall sind die Borstenhalter mit der Möglichkeit einer Winkelschwingungsbewegung ausgeführt, wobei die Borste nur in einem Flächenteil der Borstenhalter eingebaut ist. Die Fläche ist zur geöffneten Seite des Schutzschilds gewandt. Der Antriebmechanismus ist mit einer Gewährleistung einer Winkelschwingung gebaut. Im zweiten Fall sind die Borstenhalter mit der Möglichkeit einer fortlaufenden Winkelbewegung ausgeführt, und die Borste liegt mit der ganzen Zylinderfläche der Borstenhalter auf. Der Antriebmechanismus ist ein Drehantrieb.

Der Antrieb der Winkelschwingungsbewegung für die erste Variante der Bürste weist eine Kurbel auf, die mit einer Ausgangswelle des Motors gekoppelt ist. Mit beiden Kurbelknien sind zwei Gabeln gekoppelt, die ihrerseits mit koaxialen Wellen gekoppelt sind, die entlang der Achse der Zahnbürste liegen. Jede Welle im Bürstenkopf hat radiale Laufzapfen, die einzeilig in die Ringhalter der Borste eingreifen. Die Laufzapfen der Innenwelle gehen zu den entsprechenden Borstenhaltern durch Bogenfenster an der Seitenfläche der Außenwelle durch.

Eine der möglichen Varianten des Drehantriebs für die zweite Variante der Zahnbürste enthält zwei parallele Wellen, die mit der Motorwelle mit Hilfe von Zahnrädern gekoppelt sind, die die entgegen gesetzte Wellendrehung garantieren. Auf der Innenfläche jedes Borstenhalters der Borste sind Zahnräder einer Innenverzahnung gebaut. Auf den Wellen im Bereich der Borstenhalter sind Zahnritzel so aufgesetzt, dass die Zahnritzel einer Welle mit den Zahnrädern der Innenverzahnung der geraden Borstenhalter eingreifen. Die Zahnritzel der anderen Welle greifen mit den Rädern der ungeraden Halter ineinander.

Es muss betont werden, dass die hier beschriebenen Antriebskonstruktionen nicht alle Varianten einer Antriebsrealisierung der Winkelschwingungsbewegung und Drehbewegung ausschöpfen.

Die Erfindung wird anhand von Ausführungsbeispielen näher erläutert. Es zeigen:
- Fig. 1: eine Gesamtansicht der Zahnbürste,
- Fig. 2: einen Längsschnitt durch die Zahnbürste,
- Fig. 3: vergrößert den Längsschnitt durch den Bürstenkopf,
- Fig. 4: ein Grundschaltbild einer möglichen Variante des Antriebs für ei- ne Winkelschwingungsbewegung der Borstenhalter,
- Fig. 5 bis 7: veranschaulichen die Zahnbürste mit den Drehbewegungen der Borstenhalter, wobei

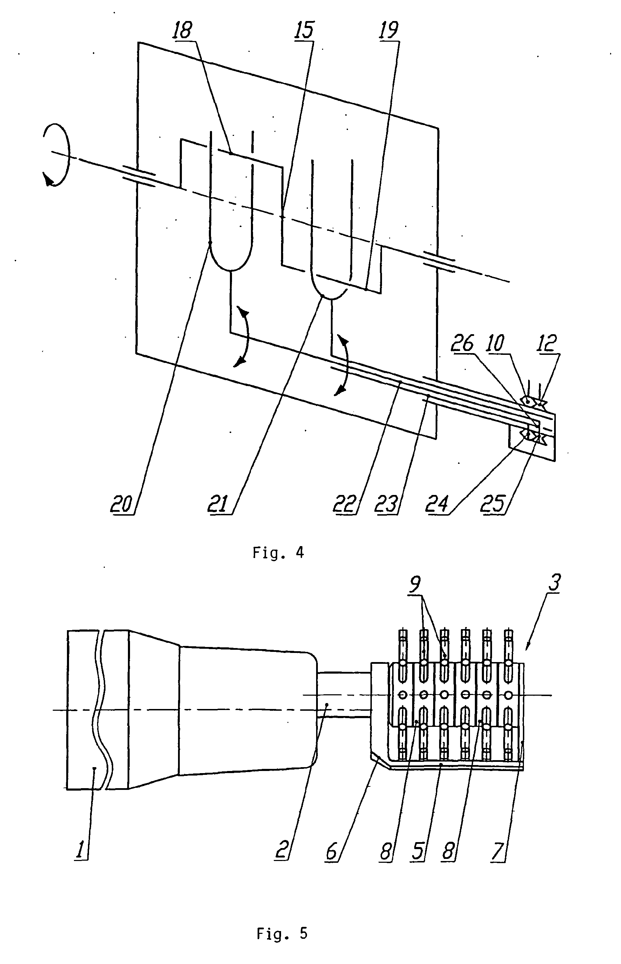

Fig. 5 eine Ansicht der Zahnbürste,
Fig. 6 den Axialschnitt des Bürstenkopfs und

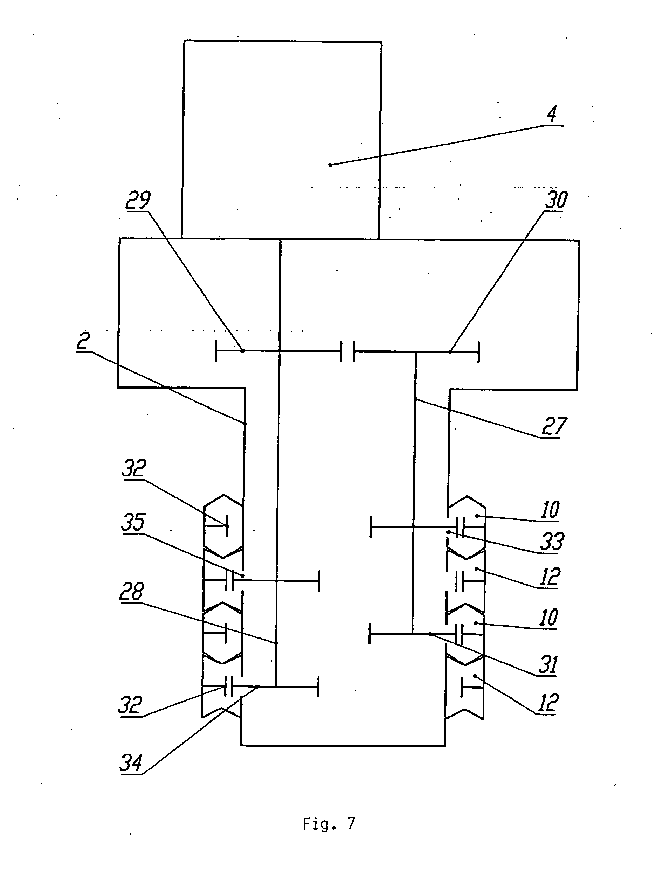

Fig. 7 das Grundschaltbild einer möglichen Variante eines Drehantriebs der Borstenhalter darstellt.

Die Bürste nach Fig. 1 bis 4 hat einen Griff 1, einen Hals 2 und einen Kopf 3, die aufeinanderfolgend entlang der Bürstenlängsachse liegen. Im Bürstengriff 1 ist ein Motor 4 eingebaut. Der Bürstenkopf 3 hat einen Schutzschild 5, der zu einer Seite geöffnet ist. Der Schutzschild 5 ist mit seinen Stirnseiten 6 und 7 fest an den zylindrischen Hals 2 fixiert. Im Bürstenkopf 3 sind an dem zylindrischen Hals 2 anschließend in Form von Ringen 8 ausgebildete Borstenhalter eingebaut. Die Borste 9 des Borstenhalters 8 ist radial nach außen von den Ringen 8 ausgestreckt und ist nur an den Bogenteilen der Ringe 8 angeordnet, die zu der geöffneten Seite des Schutzschilds 5 gewandt sind. Bei der Gewährleistung für die normale für die Reinigung ausreichende Borstendichte an ihren Enden ist die Borstendichte an der Oberfläche der Ringe 8 bedeutend niedriger als bei den Flaschenbürsten. Im Zusammenhang damit wird die Borste 9 in der angebotenen Zahnbürste bedeutend weniger verschmutzen und mit Schmutz zustopfen.

Die Anzahl der Ringborstenhalter 8 soll gerade sein, weil nur in diesem Fall die sich in die entgegen gesetzte Richtung bewegenden Ringe 8 die volle Kompensation des Reaktionsmoments garantieren werden. Die Ringborstenhalter 8 liegen entlang der Bürstenlängsachse und sind mit ihren Stirnseiten aneinandergefügt. Die Stoßstellen der Ringe 8 sind mit einer beweglichen Dichtung ausgeführt. In der konkreten Konstruktion der Fig. 2 und 3 sind das Dichtungen des Typs "Fischschwanz". Das heißt, dass die Stirnseiten der Ringe 10 mit dreieckigen Auskragungen 11 ausgebildet sind. Die Stirnseiten der anderen Ringe 12 sind mit Ausnehmungen 13 eines entsprechenden dreieckigen Profils ausgebildet. Die Ringe 10 mit den Auskragungen 11 wechseln sich mit Ringen 12 mit den Ausnehmungen 13 ab. D. h., ungerade Ringe 10 haben Auskragungen 11 und gerade Ringe 12 Ausnehmungen 13. Die Ringauskragungen 11 des dreieckigen Querschnitts bilden mit den Ausnehmungen 13 nachschaltend eine bewegliche Dichtung. Am Rande liegende Ringhalter 10 und 12 sind mit Hilfe ebensolcher Dichtungen an den Stirnseiten 6 und 7 des Schutzschilds 5 angesetzt. So bilden die Ringhalter 8 mit Hilfe der Dichtungen 11 und 13 gemeinsam mit dem Hals 2 und den Stirnseiten 6 und 7 des Schutzschilds 5 im Kopf 3 der Bürste einen hermetischen Hohlraum 14. In diesem Hohlraum 14 sind die Antriebselemente der Halter 8 für ihre Bewegung angeordnet. Dank der Abdichtung dringen in den Kopf 3 kein Wasser und keine Zahnpasta ein. Die Antriebselemente funktionieren bei günstigen Bedingungen. Der Antrieb der nieren bei günstigen Bedingungen. Der Antrieb der Winkelschwingungsbewegung stellt eine Kurbel 15 dar, die vom Motor 4 durch die Paarverzahnung 16 und 17 (s. Fig. 2 und 4) angetrieben wird. Mit den beiden Knien 18 und 19 der Kurbel 15 sind Gabeln 20 und 21 verbunden. Die Gabel 20 ist mit einer Welle 22 verbunden, die entlang der Längsachse des Zylinderhalses 2 verläuft. Die Gabel 21 ist mit einer Hohlwelle 23 verbunden, die die Welle 22 aufnimmt. Die Außenhohlwelle 23 ist mit einem Laufzapfen 24 ausgebildet und mit den ungeraden Ringhaltern 10 (s. Fig. 3 und 4) verbunden. Die Innenwelle 22 hat Laufzapfen 25, die durch Bogenfenster 26 der Außenwelle 23 hindurchgehen und im Eingriff mit den geraden Ringhaltern 12 stehen. Die Bogenlänge des Fensters 26 soll die Möglichkeit der Drehung der Halter 12 um einen maximalen Winkel gewährleisten.

Die Zahnbürste mit einer Schwingungsbewegung der Ringhalter 8 funktioniert auf folgende Weise:

Beim Einrücken des Motors 4 dreht seine Welle über das Zahnrad 16 das Zahnrad 17 und damit die Kurbel 15. Mit Hilfe der Gabeln 20 und 21 wird die Drehung der Arme 18 und 19 der Kurbel 15 in eine Gegenphasenschwingungsbewegung der koaxialen Wellen 22 und 23 umgewandelt. Sind die ungeraden Borstenhalter 10 durch die Laufzapfen 24 mit der Außenwelle 23 verbunden, schwingen sie alle in jedem Moment in einer Richtung. Die geraden Borstenhalter 12 drehen sich in demselben Zeitpunkt in die entgegen gesetzte Richtung. So leisten die Nachbarringhalter 10 und 12 der Borste 9 in jedem Moment gegenläufige Winkelbewegungen. Bei einer Bürstenkopfbewegung mit Hilfe der Hand in Längsrichtung werden die Borsten 9 in Bezug auf die Zähne eine abwechselnde Bewegung nach oben und nach unten ausführen und dabei vom Standpunkt der Reinigungseffizienz eine optimale Bewegung gewährleisten.

Die zweite Variante der Zahnbürste bei gleicher Borstenlänge hat eine ein wenig höhere radiale Kopfgröße, da die Borste 9 im ganzen Umfang des Ringhalters 8 platziert ist. Eine solche Zahnbürste mit ebensolchen Proportionen ist in Fig. 5 dargestellt. Die Zahnbürste hat auch den Griff 1 mit dem Motor (in Fig. 5 ist der Motor nicht gezeigt), den Zylinderhals 2 und den Kopf 3. Der Kopf 3 hat den Schutzschild 5 mit den Stirnseitenwänden 6 und 7 (s. Fig. 5 und 6). Der Schutzschild 5 ist auf einer Seite geöffnet. Der Schutzschild 5 ist mit den Stirnseiten 6 und 7 fest an dem Zylinderhals 2 fixiert. Im Innern des Schutzschilds 5 sind Ringhalter 8 mit Borsten 9 aufgesetzt, die sich in gerade und ungerade Ringhalter 10 bzw. 12 gliedern. Die Borste 9 ist gleichmäßig auf der ganzen Fläche der Ringhalter 8 platziert und erstreckt sich radial nach außen. Bei der Gewährleistung der normalen Borstendichte an ihren Enden ist die Borstendichte an der Oberfläche der Ringe 8 bedeutend niedriger als bei den Flaschenbürsten, und es ist leichter, sie auszuspülen. Die Ringborstenhalter 8 der Borsten 9 sind entlang der Achse der Zahnbürste platziert und miteinander mit den beweglichen Dichtungen gekoppelt. Die bewegliche Dichtung der Nachbarhalter 8 ist hier auch als Fischschwanz ausgeführt, d. h. die Ringauskragungen 11 des dreieckigen Querschnitts an den Stirnseiten der geraden Halter 10 werden mit Ringausnehmungen 13 der analogen Form an die ungeraden Halter 12 gekoppelt. Mit einer ebensolchen Dichtung sind die am Rande liegenden Ringhalter 8 mit den Stirnseiten 6 und 7 des Schutzschilds 5 gekoppelt. Wie auch im vorigen Fall bilden die Ringhalter 10 und 12 gemeinsam mit den Dichtungen und den Stirnseiten 6 und 7 des Schutzschilds 5 das Druckgehäuse, in dem Antriebselemente platziert sind. Um die Halter 10 und 12 zu bewegen, ist die innere Fläche aller Ringhalter 8 als Zahnrad mit einer Innenverzahnung 32 ausgeführt.

Der Drehantrieb dieser Zahnbürste (s. Schema in Fig. 7) stellt zwei parallele Wellen 27 und 28 dar, von denen sich eine unmittelbar mit der Motorwelle 4 dreht. Die andere Welle 28 dreht sich über die Zahnräder 29 und 30 in entgegen gesetzter Richtung. Auf der Welle 27 sind in der hermetischen Aufnahme 14 gegenüber den ungeraden Haltern 10 Ritzel 31 fixiert. Die Ritzel 31 greifen mit den Rädern 32 der ungeraden Halter 10 durch Fenster 33 im Zylinderhals 2 ein. Auf der Welle 28 sind gegenüber den geraden Haltern 12 Ritzel 34 fixiert. Diese Ritzel 34 stehen mit den Rädern 32 der geraden Halter 12 über ebensolche Fenster 35 im Eingriff.

### Diese Variante der Zahnbürste funktioniert auf folgende Weise:

Beim Einrücken des Motors 4 drehen sich die Wellen 27 und 28 in die entgegen gesetzten Richtungen. Durch das Ritzel 34 dreht sich die Welle 28 aller geraden Ringborstenhalter 10. Die Welle 27 dreht über das Ritzel 31 in entgegen gesetzter Richtung alle ungeraden Ringhalter 12. So drehen sich die Nachbarringe mit den Borsten in entgegen gesetzten Richtungen. Der Schutzschild 5 schließt die gegenüberliegende nicht funktionierende Fläche des Bürstenkopfs 3 ab und schützt die Weichteile der Mundhöhle vor der Wirkung der Borsten 9. Bei einer manuellen Bewegung des Bürstenkopfs 3 entlang der Zähne erfährt jeder Zahn eine abwechselnde reinigende Bewegung der Borsten entlang des Zahns nach oben und nach unten. D. h. es wird eine effizientere Bewegung der Borsten 9 vom Standpunkt der Qualität der Zahnreinigung geleistet. Alle Bauteile und Elemente des Antriebsmechanismus der Borstenhalter sind sicher und einfach abgedichtet, und es tritt kein Eintritt von Wasser und Zahnpasta auf.

Im Ausführungsbeispiel ist als bewegliche Dichtung zwischen den Ringhaltern eine Labyrinth-Dichtung in Form eines Fischschwanzes beschrieben. Es sei betont, dass statt dieser Labyrinth-Dichtung jede andere Form eingesetzt werden kann, wenn diese Dichtungen der beweglichen Verbindungen den Forderungen, wie Einfachheit und Sicherheit, entsprechen.

Die mechanischen Zahnbürsten sind so ausgearbeitet, dass sie eine einfache Konstruktion bei einer sicheren Abdichtung des Motors und der Antriebselemente aufweisen. Ihre Prüfungen zeigen eine hohe Effizienz der Zahnreinigung.

## Patentansprüche

1. Mechanische Zahnbürste, die einen entlang der Längsachse liegenden Griff (1) mit einem Motor (4), einen Hals (2) und einen Kopf (3) aufweist, in dem ein Antriebsmechanismus angeordnet ist, wobei der Kopf (3) die Form eines auf einer Seite geöffneten Schutzschilds (5) aufweist, in dem ein Borstenhalter (8) eingebaut ist, wobei der Borstenhalter (8) mit der Möglichkeit einer Winkelbewegung in entgegen gesetzten Richtungen um die Längsachse herum ausgebildet ist und wobei der Borstenhalter (8) entlang der Längsachse der Zahnbürste angeordnet ist,
**dadurch gekennzeichnet,**
**dass** der Borstenhalter mit einer geraden Anzahl von einzelnen Borstenringen (8) mit einer radialen Borstenstellung ausgebildet ist und
**dass** die Borstenringe (8) entlang der Längsachse der Zahnbürste mit ihren Stirnseiten zueinander und mit dem Schutzschild (5) mit Hilfe von Dichtungen (10, 12) so gekoppelt sind, dass sie ein Druckgehäuse für den Antriebsmechanismus bilden.

2. Mechanische Zahnbürste nach Anspruch 1,
**dadurch gekennzeichnet,**
**dass** die Borstenhalter als Ringborstenhalter (8) mit der Möglichkeit einer periodischen Winkelbewegung ausgebildet sind,
**dass** die Borsten (9) nur in einem Teil der Ringfläche der Ringborstenhalter (8) eingebaut sind, der zur geöffneten Seite des Schutzschilds (5) gewandt ist, und
**dass** der Antriebsmechanismus so ausgeführt ist, dass er eine Winkelbewegung der Ringborstenhalter (8) gewährleistet.

3. Mechanische Zahnbürste nach Anspruch 1,
**dadurch gekennzeichnet,**
**dass** die Ringborstenhalter (8) mit der Möglichkeit einer fortlaufenden Winkelbewegung ausgebildet sind und
**dass** der Antriebsmechanismus eine fortlaufende Drehung gewährleistet, d. h. als Drehantrieb wirkt.

4. Winkelschwingungsantriebsmechanismus für eine mechanische Zahnbürste nach Anspruch 2,
**dadurch gekennzeichnet,**
**dass** er eine Kurbel (15) aufweist, die mit einer Ausgangswelle des Motors (4) gekoppelt ist,
**dass** zwei Gabeln (20, 21) mit beiden Knien der Kurbel (15) gekoppelt sind, dass die Wellen (22, 23) koaxial ausgebildet und jede mit der entsprechenden Gabel (20 bzw. 21) gekoppelt sind und entlang der Längsachse der Zahnbürste verlaufen und
**dass** die Wellen (22, 23) im Bürstenkopf (3) in Längsrichtung radiale Laufzapfen (24, 25) aufweisen, die einzeilig in die Ringborstenhalter (8) eingreifen, wobei die Laufzapfen (24) der Innenwelle (22) über entsprechende Bogenfenster (26) auf der Seite der Außenwelle (25) zu den Ringborstenhaltern (10) durchgehen.

5. Drehantriebsmechanismus für eine mechanische Zahnbürste nach Anspruch 3,
**dadurch gekennzeichnet,**
**dass** er zwei parallele Wellen (27, 28) aufweist, die mit der Motorwelle (4) über Zahnräder (29, 30) mit entgegen gesetzter Drehrichtung gekoppelt sind, dass die Wellen (27, 28) über den Hals (2) in den Kopf (3) durchgehen,
**dass** die Zahnräder (29) des inneren Eingriffs an den inneren Flächen der Ringborstenhalter (8) ausgebildet sind,
**dass** Ritzel (31) auf der Welle (27) befestigt und über Fenster (32) im Zylinderhals (2) mit den Rädern (32) der ungeraden Ringborstenhalter (10) im Eingriff stehen,
**dass** auf der Welle (28) gegenüber den geraden Ringborstenhaltern (12) Ritzel (34) befestigt sind und
**dass** diese Ritzel (34) über ebensolche Fenster (35) mit den Rädern (35) der geraden Ringborstenhalter (12) im Eingriff stehen.
